# EUROPÄISCHE PATENTSCHRIFT

(11) **EP 2 473 761 B1**
(45) Veröffentlichungstag und Bekanntmachung des Hinweises auf die Patenterteilung: **01.07.2015**
(21) Anmeldenummer: 10760235.1
(22) Anmeldetag: 06.08.2010
(51) Int. Cl.: F16H 48/08, F16H 48/10

(54) **DIFFERENZIAL**
DIFFERENTIAL
DIFFÉRENTIEL

(30) Priorität: 02.09.2009 DE 102009039753; 26.11.2009 DE 102009055867
(43) Veröffentlichungstag der Anmeldung: 11.07.2012
(73) Patentinhaber: Amtek Tekfor Holding GmbH, 77652 Offenburg (DE)
(72) Erfinder: FINKENZELLER, Eva-Maria, 77723 Gengenbach (DE); KÜMPEL, Renald, 98617 Herpf (DE); FUCHS, Kathrin, 77790 Steinach (DE)
(86) Internationale Anmeldenummer: PCT/DE2010/000938
(87) Internationale Veröffentlichungsnummer: WO 2011/026454

(56) Entgegenhaltungen:
- WO-A1-2010/118727
- DE-A1- 3 926 878
- DE-A1-102007 005 730
- DE-B3-102007 005 734
- GB-A- 190 914 547

## Beschreibung

Die Erfindung bezieht sich auf ein Differenzial gemäß dem Oberbegriff des Patentanspruchs 1, wie aus Dokument DE 10 2007 005 730 A1 bekannt.

Ein Differentialgetriebe bzw. Differenzialgetriebe, auch Ausgleichsgetriebe oder kurz Differential bzw. Differenzial genannt, ist ein spezielles Planetengetriebe, welches z.B. beim Fahren eines Fahrzeugs in einer Kurve einen Ausgleich für den von den beiden Rädern einer Achse zurückgelegten unterschiedlich langen Weg schafft, indem die Räder sich mit unterschiedlicher Geschwindigkeit drehen. Hierfür erfährt ein Verbindungselement von einem Antriebsrad ein Antriebsdrehmoment und wird dadurch in Rotation versetzt. Das Antriebsrad selbst wiederum ist mit einem Übersetzungsgetriebe und darüber mit dem eigentlichen Fahrzeugmotor verbunden. In dem Verbindungselement sind zwei Achsräder angeordnet, welche jeweils auf einen mit einem Rad verbundenen Achsenabschnitt ein Drehmoment übertragen, welches vom vorgegebenen Antriebsdrehmoment abhängig ist. Das Ausgleichsrad steht dabei in drehmoment-relevanter Verbindung zu den Achsrädern. In dem Fall, dass eine Drehzahldifferenz zwischen den beiden Rädern auftritt, dreht sich das Ausgleichsrad und bewirkt, dass eine Achse sich mit einer höheren Geschwindigkeit dreht. Das Verbindungselement ist im Stand der Technik im Allgemeinen ein Differenzialkorb, in welchem die Achsräder und die Ausgleichsräder angeordnet sind und welches am Umfang mit dem Antriebsrad verbunden ist.

Eine Ausgestaltung eines Differenzials findet sich beispielweise in der Offenlegungsschrift WO 2008/122276.

Nachteile in den Ausgestaltungen des Standes der Technik erwachsen insbesondere aus dem Differenzialkorb. Dieser ist zumeist aufwändig zu fertigen, führt zu einem hohen Platzbedarf und bringt ein hohes Gewicht mit.

Differenziale, die den klassischen Differenzialkorb durch ihre Ausgestaltung vermeiden, offenbaren beispielsweise die Offenlegungsschriften DE 39 26 878 A1 oder DE 10 2007 005 730 A1. Ähnliche Ausgestaltungen insbesondere in Bezug auf ein zentrales Verbindungselement zeigen beispielsweise die Patentschriften GB 14,547 oder DE 10 2007 005 734 B3.

Der Erfindung liegt die Aufgabe zugrunde, ein Differenzial vorzuschlagen, welches die Nachteile des Stands der Technik in Bezug auf Gewicht und Platzbedarf überwindet.

Die Aufgabe wird erfindungsgemäß dadurch gelöst, dass die Hinterlage an einer Stirnseite eine Aussparung in Form einer Nut aufweist, welche ein offenes Ende aufweist und welche durchgehend von dem offenen Ende bis zu dem Fixierungsbereich verläuft.

Durch diese Aussparung ist somit der Fixierbereich insbesondere für die Erzeugung der Fixierung zugänglich. Daher ist insbesondere das offene Ende vorgesehen.

Im Stand der Technik ist das Verbindungselement zumeist ein Differenzialkorb, welcher seitlich am Umfang des Antriebsrads befestigt ist. In der Erfindung wird jedoch das Verbindungselement in das Antriebsrad selbst eingebracht und wird quasi zumindest teilweise von diesem umschlossen. Damit geht einher, dass das Antriebsrad über zumindest einen freien Innenbereich verfügt. Beispielsweise handelt es sich bei dem Antriebsrad im Wesentlichen um ein Zahnrad, dessen Körper bzw. Flanschfläche nicht gefüllt, d.h. frei ist. Durch die kompakte Bauweise des erfindungsgemäßen Differenzials wird auch die Montierbarkeit des Differenzials vereinfacht. Das erfindungsgemäße Differenzial reduziert auch vorteilhafterweise den Herstellungsaufwand. Das erfindungsgemäße Differenzial bietet überdies die Vorteile der Öldichtigkeit, d.h. das Differenzial lässt sich vor der eigentlichen (End-)Montage bereits mit Öl befüllen. Dies steht im Gegensatz zu den Differenzialen des Standes der Technik, bei welchen die Ölbefüllung erst nach der Endmontage erfolgen kann. Zudem tritt bei dem erfindungsgemäßen Differenzial kein Ölverlust bei der Demontage der Seitenwellen auf.

Die erste imaginäre Achse verläuft im Allgemeinen im eingebauten Zustand des Differenzials parallel zur Fahrzeuglängsachse.

Eine Ausgestaltung der Erfindung sieht vor, dass mindestens zwei Ausgleichsräder vorgesehen sind, dass das Verbindungselement mindestens zwei Ausgleichsrad-Zapfen aufweist, um welche jeweils eines der mindestens zwei Ausgleichsräder drehbar angeordnet ist, und dass die mindestens zwei Ausgleichsrad-Zapfen entlang der zweiten imaginären Achse des Verbindungselements angeordnet sind. In dieser Ausgestaltung sind somit zwei Ausgleichsräder mit zugehörigen Zapfen vorgesehen. Dabei sind vorzugsweise hier ebenfalls die beiden Zapfen voneinander abgewandt auf der zweiten imaginären Achse ausgerichtet.

Eine Ausgestaltung der Erfindung beinhaltet, dass das Antriebsrad sich im Wesentlichen innerhalb einer imaginären Ebene dreht, dass die erste imaginäre Achse im Wesentlichen in Richtung der Flächennormalen der imaginären Ebene verläuft, innerhalb welcher das Antriebsrad sich dreht. Eine Ausgestaltung sieht vor, dass die zweite imaginäre Achse des Verbindungselements im Wesentlichen innerhalb der imaginären Ebene liegt, innerhalb welcher das Antriebsrad sich dreht. Und eine weitere Ausgestaltung beinhaltet, dass die zweite imaginäre Achse des Verbindungselements im Wesentlichen innerhalb einer Ebene liegt, welche im Wesentlichen parallel zu der imaginären Ebene verläuft, innerhalb welcher das Antriebsrad sich dreht. Das Antriebsrad dreht sich innerhalb einer imaginären Ebene, wobei senkrecht zu dieser Ebene die erste imaginäre Achse verläuft. In einer Ausgestaltung drehen sich damit die beiden Achsräder und das Antriebsrad um die gleiche Achse. Die zweite imaginäre Achse verläuft in einer Ausgestaltung innerhalb der Ebene, in welcher sich das Antriebsrad dreht und ist in einer anderen Ausgestaltung parallel dazu versetzt, d.h. das Verbindungselement liegt entweder mittig in der leeren Flanschfläche des Antriebsrads oder befindet sich seitlich versetzt dazu. Die zweite imaginäre Achse fällt in einer Ausgestaltung insbesondere mit einer Kreissehne eines im Wesentlichen scheibenförmigen Antriebsrads zusammen, welche durch den Mittelpunkt einer kreisförmigen Ebene des Antriebsrads verläuft.

Das Verbindungselement ist insbesondere in einer Ausgestaltung einstückig ausgestaltet. Weiterhin ist es je nach Ausgestaltung massiv oder verfügt über Hohlräume. Die Form des zentralen Bereichs ist dabei je nach Ausgestaltung näherungsweise eine Kugel-, Würfel- oder Rechteckform.

Eine Ausgestaltung der Erfindung sieht vor, dass der zentrale Bereich des Verbindungselements im Wesentlichen symmetrisch um den Schwerpunkt des Antriebsrads angeordnet ist. Es besteht somit eine gleichmäßige Massenverteilung.

Durch die Verbindung des Ausgleichsrad-Zapfens zumindest teilweise mit der Innenfläche des Antriebsrads wird das Verbindungselement mit dem Antriebsrad gekoppelt und erfährt dadurch ein erstes Drehmoment, d.h. durch das Drehen des Antriebsrads dreht sich das Verbindungselement mit.

Eine Ausgestaltung sieht vor, dass die einander berührenden Flächen des mindestens einen Ausgleichsrad-Zapfens und des Antriebsrads im Wesentlichen zueinander korrespondierend ausgestaltet sind. In einer alternativen Ausgestaltung passen die Flächen nicht korrespondierend zueinander, sondern bilden Hohlräume zwischen einander aus.

Eine Ausgestaltung beinhaltet, dass die einander berührenden Flächen des mindestens einen Ausgleichsrad-Zapfens und des Antriebsrads im Wesentlichen flach ausgestaltet sind. Dies beispielsweise für eine leichte Zugänglichkeit für eine Schweißung bzw. für eine Laser-Schweißung.

Eine Ausgestaltung besteht darin, dass die einander berührenden Flächen des mindestens einen Ausgleichsrad-Zapfens und des Antriebsrads im Wesentlichen zueinander korrespondierende Profile aufweisen.

Vorzugsweise ist das Antriebsrad in der Art eines Zahnkranzes ausgestaltet. Der Innenraum ist dabei in einer Ausgestaltung im Wesentlichen kreisförmig.

Eine Ausgestaltung der Erfindung sieht vor, dass das Antriebsrad eine gerade oder eine schräge oder eine hypoidale Außenverzahnung aufweist.

Eine Ausgestaltung der Erfindung beinhaltet, dass zwischen den mindestens zwei Achsrad-Zapfen und dem auf dem jeweiligen Achsrad-Zapfen angebrachten Achsrad jeweils mindestens ein Gleitnapf angeordnet ist. Der Gleitnapf dient der Aufnahme von Kräften und verhindert beispielsweise auch, dass sich Achsrad und Ausgleichsrad gegeneinander verklemmen.

Eine Ausgestaltung der Erfindung sieht vor, dass zwischen dem mindestens einen Ausgleichsrad-Zapfen und dem auf dem mindestens einen Ausgleichsrad-Zapfen angebrachten Ausgleichsrad mindestens eine Gleitlagerbuchse angeordnet ist. Die Gleitlagerbuchse dient ebenfalls dem Auffangen von Kräften oder Momenten, welche sich negativ auf die Kegelräder auswirken könnten. Sind zwei Ausgleichsräder vorgesehen, so ist vorzugsweise jeweils zwischen Ausgleichsrad und Ausgleichsrad-Zapfen mindestens eine Gleitlagerbuchse vorgesehen.

Die Hinterlage, die längs des mindestens einen Ausgleichsrad-Zapfens angeordnet ist, dient der axialen Abstützung der Ausgleichsräder und sorgt somit für den Eingriff der zugehörigen Kegelräder zueinander. Weiterhin wird so das Verzahnungsspiel zwischen den Kegelrädern eingestellt.

Die Erfindung sieht vor, dass die Hinterlage mindestens eine Aussparung aufweist, wobei die Aussparung mindestens ein offenes Ende aufweist, wobei die Aussparung derartig ausgestaltet und angeordnet ist, dass die Aussparung zumindest ausgehend von dem offenen Ende mindestens auf einen Rand des Fixierungsbereichs mündet, an welchem der mindestens eine Ausgleichsrad-Zapfen zumindest teilweise mit der Innenfläche des Antriebsrads verbunden ist.

Eine Ausgestaltung beinhaltet, dass der Ausgleichsrad-Zapfen an dem Fixierungsbereich mit dem Antriebsrad verschweißt, insbesondere laserverschweißt ist.

Eine Ausgestaltung der Erfindung sieht vor, dass längs des mindestens einen Ausgleichsrad-Zapfens zwischen der vom zentralen Bereich abgewandten Seite des Ausgleichsrads und der mindestens einen Hinterlage mindestens eine Anlaufscheibe angeordnet ist. Die Anlaufscheiben sorgen für günstige Gleitbedingungen zwischen dem jeweiligen Ausgleichsrad und der jeweils auf dem gleichen Zapfen dahinter positionierten Hinterlage.

Eine Ausgestaltung der Erfindung beinhaltet, dass mindestens eines der mindestens zwei Achsräder ein Außenprofil oder ein Innenprofil zur Anbindung einer Welle und/oder eines Rades aufweist. Beispielsweise sind eine Außenverzahnung oder eine Innenverzahnung zur Anbindung vorgesehen.

Eine Ausgestaltung der Erfindung sieht vor, dass mindestens ein Gehäuse vorgesehen ist, welches mindestens das Verbindungselement und zumindest einen Teil des Antriebsrads umschließt. Das Gehäuse umschließt jedoch nur das erfindungsgemäße Differenzial und dient nicht wie im Stand der Technik der Übertragung von Drehmomenten. Das erfindungsgemäße Differenzial ist ein in Bezug auf seine Funktion gehäuseloses Differenzial.

Eine Ausgestaltung der Erfindung beinhaltet, dass das Gehäuse mindestens einen Durchbruch aufweist, über welchen auf das Antriebsrad die Übertragung eines Drehmoments erfolgt.

Eine Ausgestaltung der Erfindung sieht vor, dass mindestens ein Kegelrollenlager vorgesehen ist. Die Rollenlager fangen axiale Kräfte auf und sorgen für die Führung der Achsräder.

Eine Ausgestaltung sieht vor, dass mindestens eine Wälzlagerung vorgesehen ist. Die Wälzlagerung ist beispielsweise als Kugellager ausgestaltet. Die Wälzlagerung befindet sich weiterhin beispielsweise zwischen den Achsrädern und den jeweiligen Achsrad-Zapfen.

Eine Ausgestaltung der Erfindung beinhaltet, dass das Verbindungselement einteilig ist. Das Verbindungselement ist beispielsweise ein einteiliges bzw. einstückiges Schmiedeteil. In einer alternativen Variante ist vorgesehen, dass das Verbindungselement mehrteilig ist.

Eine Ausgestaltung sieht vor, dass mindestens vier Ausgleichsräder vorgesehen sind, dass das Verbindungselement mindestens vier Ausgleichsrad-Zapfen aufweist, um welche jeweils eines der mindestens vier Ausgleichsräder drehbar angeordnet ist, dass zwei der mindestens zwei Ausgleichsrad-Zapfen entlang der zweiten imaginären Achse des Verbindungselements angeordnet sind, und dass zwei der mindestens zwei Ausgleichsrad-Zapfen entlang einer imaginären Achse angeordnet sind, die im Wesentlichen senkrecht auf der ersten imaginären Achse und auf der zweiten imaginären Achse des Verbindungselements steht. Die oben genannten Befestigungszapfen dienen somit in dieser Ausgestaltung auch dem Tragen der Ausgleichsräder. Alternativ lassen sich jedoch auch zusätzliche Befestigungszapfen vorsehen.

Eine Ausgestaltung beinhaltet, dass mindestens ein Achsrad im Wesentlichen als Kegelrad ausgestaltet ist.

Eine Ausgestaltung sieht vor, dass mindestens ein Achsrad im Wesentlichen als Kronenrad ausgestaltet ist. Ein Kronenrad und entsprechende Stirnräder übertragen die auftretenden Kräfte bzw. Momente. Vorteile von Kronenrädern bestehen darin, dass so die Einstellung des Tragbildes bei der Montage des Differenzials entfallen kann, und dass das Tragbild keine Beeinflussung bei unterschiedlichen Lasten erfährt.

Eine Ausgestaltung beinhaltet, dass mindestens ein Achsrad als Stirnrad ausgestaltet ist.

Eine Ausgestaltung sieht vor, dass mindestens ein Ausgleichsrad als Kegelrad ausgestaltet ist.

Eine Ausgestaltung beinhaltet, dass mindestens ein Ausgleichsrad als Stirnrad ausgestaltet ist.

Eine Ausgestaltung sieht vor, dass mindestens ein Ausgleichsrad als Kronenrad ausgestaltet ist.

Die Ausgestaltungen der Achsräder und der Ausgleichsräder sind dabei jeweils passend zueinander zu wählen.

Die Erfindung wird anhand einiger in den Figuren dargestellter Ausführungsbeispiele näher erläutert. Dabei zeigen:
Fig. 1: Schnitt durch eine erste Variante eines nicht erfindungsgemäßen Differenzials,
Fig. 2: räumliche Darstellung der Variante der Fig. 1,
Fig. 3: Schnitt durch eine zweite Variante eines nicht erfindungsgemäßen Differenzials,
Fig. 4: räumliche Darstellung der Variante der Fig. 3,
Fig. 5: Schnitt durch eine dritte Variante eines nicht erfindungsgemäßen Differenzials,
Fig. 6: räumliche Darstellung der Variante der Fig. 5,
Fig. 7: geschnittene räumliche Darstellung einer Variante des erfindungsgemäßen Differenzials,
Fig. 8: ein Schnitt durch eine weitere Variante des erfindungsgemäßen Differenzials, und
Fig. 9: ein Schnitt durch eine zusätzliche Variante des erfindungsgemäßen Differenzials.

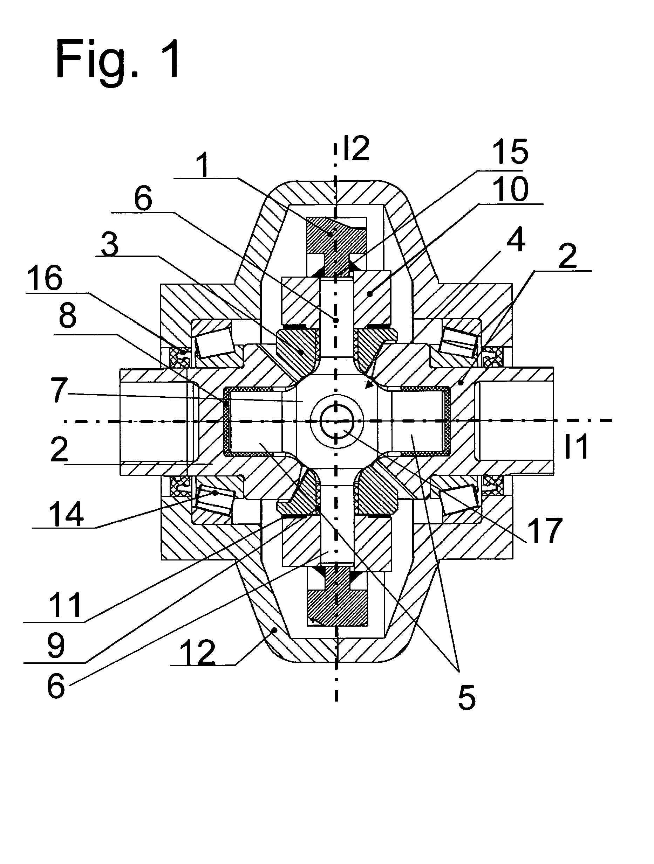

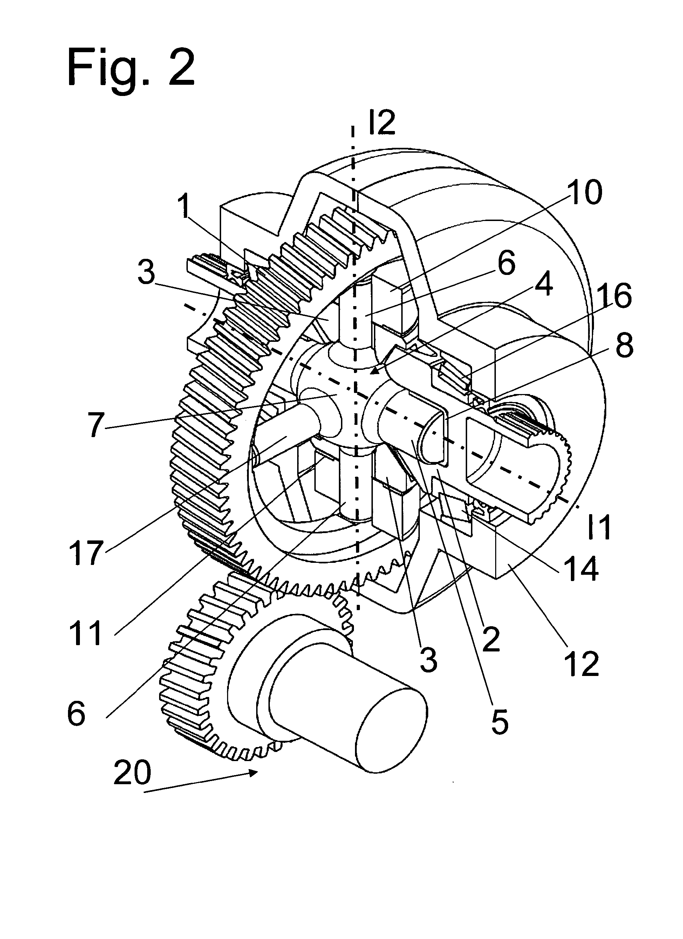

Im Schnitt der Fig. 1 und der zugehörigen räumlichen Darstellung der Fig. 2 ist eine erste Variante eines nicht erfindungsgemäßen Differenzials dargestellt. In dem Gehäuse 12 ist im Wesentlichen mittig das Verbindungselement 4 angeordnet, welches im Stand der Technik als Differenzialkorb ausgestaltet ist. In dieser Ausgestaltung hat es die Form eines im Wesentlichen massiven zentralen Bereiches 7, von welchem in dieser Ausgestaltung insgesamt sechs Zapfen ausgehen (vgl. die zugeordnete Fig. 2). Dabei handelt es sich um zwei Achsrad-Zapfen 5, zwei Ausgleichsrad-Zapfen 6 und zwei Befestigungs-Zapfen 17. Die Zapfen 5, 6, 17 sind dabei im Wesentlichen zylindrisch ausgestaltet, wobei der Durchmesser der Achsrad-Zapfen 5 in dieser hier gezeigten Ausgestaltung größer ist als der der beiden anderen Zapfen-Arten 6, 17.

Das somit in dieser Ausgestaltung sternförmige Verbindungselement 4 - welches sich auch als Planetenträger im funktionalen Zusammenhang bezeichnen lässt - ist über die zwei Ausgleichsrad-Zapfen 6 und die zwei Befestigungs-Zapfen 17 mit dem Antriebsrad 1 verbunden. Das Antriebsrad 1 ist dabei ein Zahnrad bzw. ein Zahnkranz, d.h. außen befindet sich eine Verzahnung und der Innen- oder Flanschbereich des Antriebsrades 1 ist leer oder derartig frei von Material, dass ausreichend Raum für die übrigen Bestandteile des erfindungsgemäßen Differenzials gegeben ist. Das Antriebsrad 1 weist hier insbesondere eine schräge Außenverzahnung auf.

Wie in Fig. 2 zu erkennen, wird das Antriebsrad 1 über den Antrieb 20 zu Drehungen um die erste imaginäre Achse I1 angetrieben, d.h. das Antriebsrad 1 empfängt ein erstes Drehmoment. Der Antrieb 20 ist dabei mittelbar mit dem - nicht dargestellten - Motor des Fahrzeugs verbunden, in welchem das Differenzial eingebaut ist. Das Antriebsrad 1 selbst überträgt ein vom ersten Drehmoment abhängiges zweites Drehmoment auf die - nicht dargestellten - seitlich angebrachten Räder über die Drehung der Achsräder 2, welche sich jeweils um den zugeordneten Achsrad-Zapfen 5 drehen. Für die Anbindung des Differenzials in die Fahrzeugachse sind hier an den Achsrädern 2 Außenverzahnungen angebracht. Die Achsräder 2 sind somit in dieser Ausgestaltung als Kegelräder ausgeformt, an deren Grundflächen jeweils eine im Wesentlichen zylindrische Einheit angebracht ist, die hier über die Außenverzahnung verfügt. Die Achsräder 2 sind über jeweils einen Gleitnapf 8 (vgl. Fig. 1 und Fig. 2), dessen Gleitfläche außen, d.h. jeweils in Richtung der Achsräder 2 angeordnet ist, auf jeweils einem Achsrad-Zapfen 5 drehbar angeordnet. Zwischen den Achsrädern 2 und dem Gehäuse 12 sind weiterhin jeweils zwei Kegelrollenlager 14 vorgesehen, welche für eine axiale Abstützung entlang der ersten imaginären Achse I1 sorgen. Zudem ist das Gehäuse 12 in Richtung der Räder jeweils durch eine Radialwellendichtung 16 in Form eines Radialwellendichtrings seitlich abgedichtet. Dies ermöglicht es unter Anderem, das erfindungsgemäße Differenzial als im Wesentlich vollständig geschlossene Einheit auszubilden. Dafür ist auch der Durchbruch zur Verbindung mit dem Antrieb entsprechend zu gestalten. Diese abgeschlossene Ausgestaltung erlaubt auch die Befüllung mit Öl vor der Montage des Differenzials.

Längs der zweiten imaginären Achse I2, die senkrecht auf der ersten imaginären Achse I1 steht, sind zwei Ausgleichsrad-Zapfen 6 für zwei Ausgleichsräder 3 vorgesehen. Die Achsräder 2 und die Ausgleichsräder 3 sind derartig ausgestaltet und zueinander angeordnet, dass sie über ihre Zähne in Eingriff miteinander stehen. Durch die Ausgleichsräder 3 wird dabei die normale Funktionsweise eines Differenzials ausgeübt. Mittels der zwei Ausgleichsräder 3 überträgt das Verbindungselement 4 das zweite Drehmoment auf die Achsräder 2. Die Ausgleichsräder 3 sind über Gleitlagerbuchsen 9 drehbar um die Ausgleichsrad-Zapfen 6 angeordnet. Die Ausgleichsrad-Zapfen 6 wiederum sind über jeweils einen Fixierungsbereich 15, beispielsweise über Schweißen oder Laser-Schweißen mit dem Antriebsrad 1 verbunden und drehen sich daher mit diesem mit. In Richtung der Innenfläche des Antriebsrades 1 ist weiterhin jeweils eine Hinterlage 10 vorgesehen, welche der axialen Abstützung der Ausgleichsräder 3 dient und somit eine Bewegung dieser radial nach außen verhindert. Die insbesondere in Fig. 1 zu erkennende unterschiedliche Höhe der Hinterlagen 10 dient zum einen der Montage und zum anderen der seitlichen Abstützung der Hinterlagen 10. Zwischen den Hinterlagen 10 und den zugehörigen Ausgleichsräder 3 sind jeweils Anlaufscheiben 11 vorgesehen, welche jeweils dem Gleiten zwischen Ausgleichsrad 3 und Hinterlage 10 dienen.

In der Fig. 2 ist insbesondere ein Befestigungs-Zapfen 17 zu erkennen, welcher der Fixierung des Verbindungselements 4 mit der Innenfläche des Antriebsrades 1 dient.

Das Differenzial unterscheidet sich somit zumindest darin vom Stand der Technik, dass die Konstruktion - hier allgemein bezeichnet als Verbindungseinheit - zur Übertragung des Drehmoments auf die Räder einer Fahrzeugachse und zum Reagieren auf eine Drehzahldifferenz bzw. eine unterschiedliche Geschwindigkeit der beiden Räder innerhalb des Antriebsrads angeordnet ist und nicht wie im Stand der Technik seitlich daran fixiert ist. Somit verringert sich der Platzbedarf des Differenzials und die Ausgestaltung erlaubt auch ein geringeres Gewicht. Der große Unterschied zum Stand der Technik besteht insbesondere darin, dass es kein Gehäuse für die Funktion des Differenzials gibt.

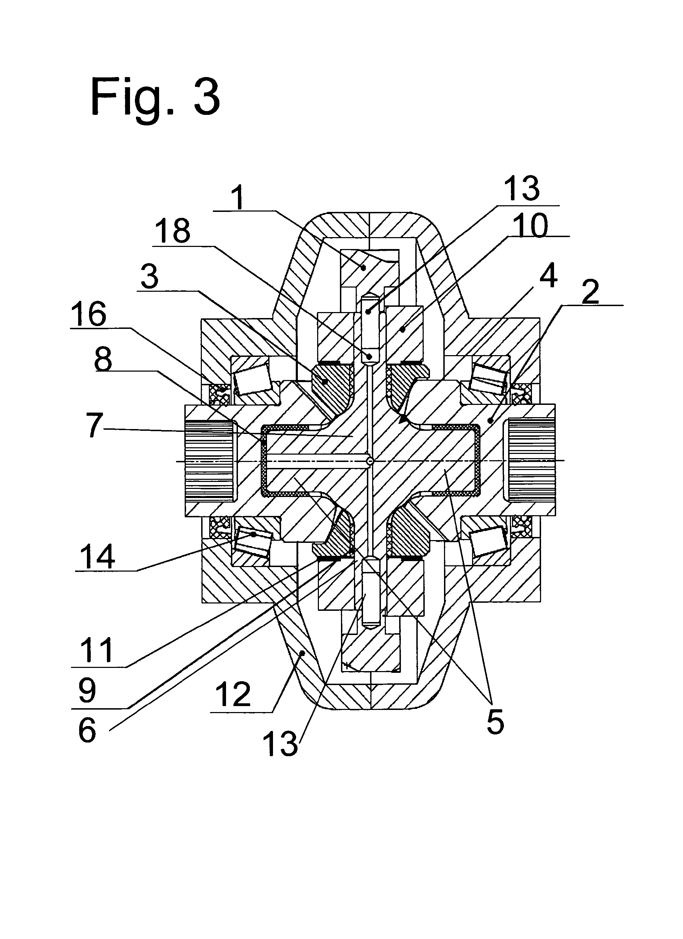

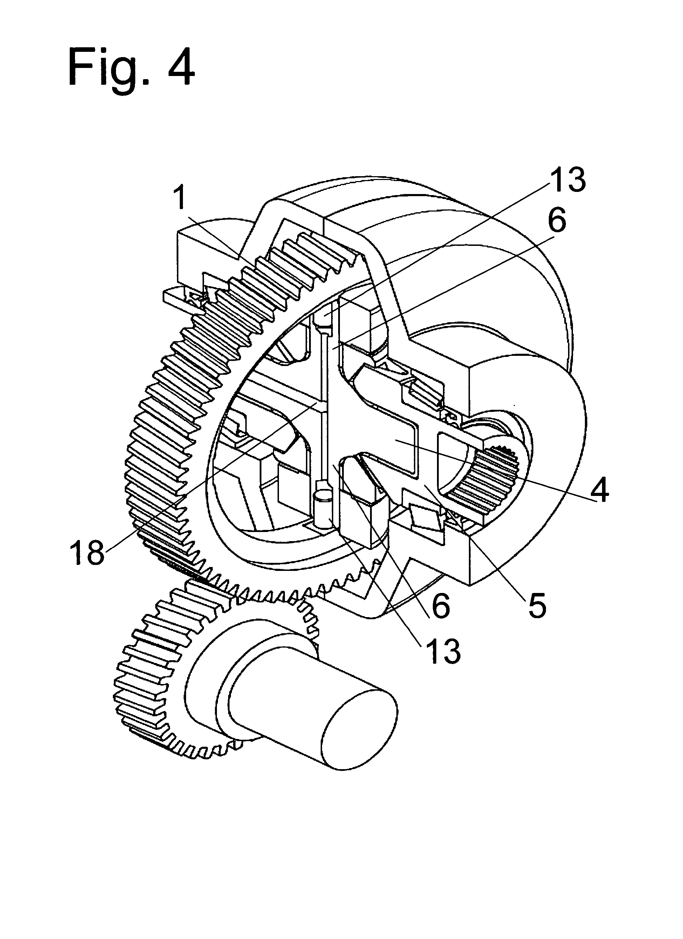

In der Fig. 3 ist ein Schnitt durch eine zweite Variante eines nicht erfindungsgemäßen Differenzials dargestellt. Fig. 4 zeigt eine zugeordnete angeschnittene räumliche Darstellung davon. Zu sehen ist hier insbesondere eine alternative Ausgestaltung der Fixierung des Verbindungselements 4 an dem Antriebsrad 1. Die Anbindung wird über Fixierstifte 13 realisiert, welche zum Teil in den Ausgleichsrad-Zapfen 6 bzw. den Befestigungs-Zapfen 17 und zum Teil in Aussparungen des Antriebsrads 1 stecken. Um die Stifte 13 nach der Montage - d.h. nach dem Aufstecken der Bauteile auf die Zapfen und dem Einbringen in das Antriebsrad 1 - in die jeweilige Aussparungen des Antriebsrads 1 einzubringen, ist ein Hydraulikkanal 18 vorgesehen, welcher in einem der Achsrad-Zapfen 5 mündet. Der Hydraulikkanal 18 - alternativ handelt es sich um einen Pneumatik-Kanal - führt jeweils in Richtung der Zapfen, über welche die Fixierung des Verbindungselements 4 an das Antriebsrad 1 realisiert wird. Insbesondere in Fig. 4 ist im Antriebsrad 1 auch die Aussparung im Verbindungselement 4 zu erkennen, in welcher der Fixierstift 13 eingebracht ist. In diesen Kanal 18 wird beispielsweise ein Öl eingebracht, über welches bei Druckbeaufschlagung die Stifte 13 nach außen und somit in die Aussparungen des Antriebsrades 1 verschoben werden. Es bestehen jedoch auch andere Möglichkeiten, z.B. die Anwendung von Federn.

Die Variante der Fign. 3 und 4 unterscheidet sich überdies von der oben diskutierten ersten Variante der Fign. 1 und 2 darin, dass die zwei Achsrad-Zapfen 5 jeweils eine Innenverzahnung zur Anbindung an die zu den Räder führenden Seitenwellen aufweisen.

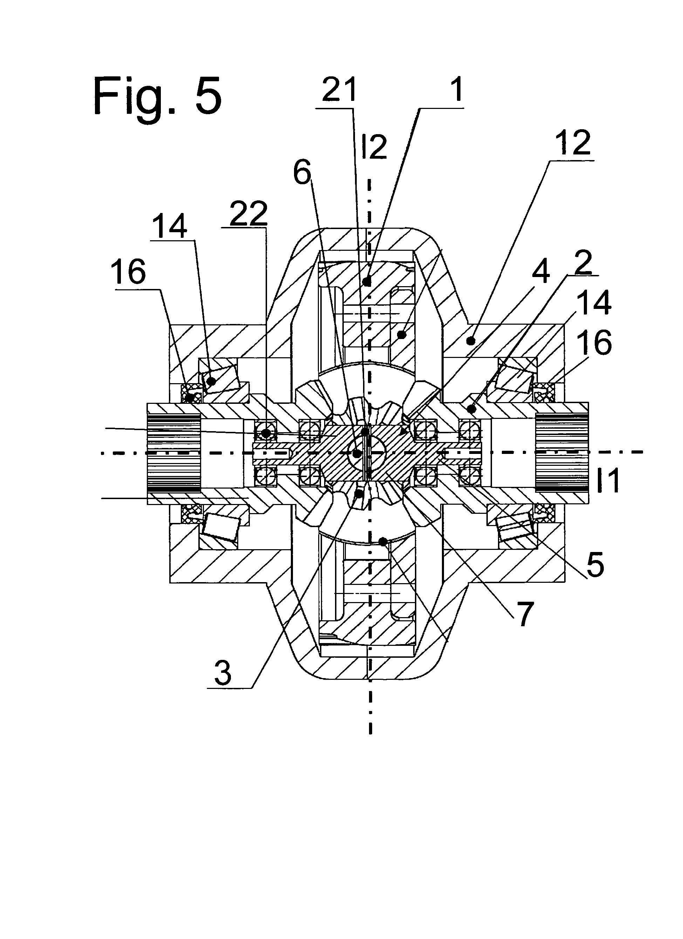

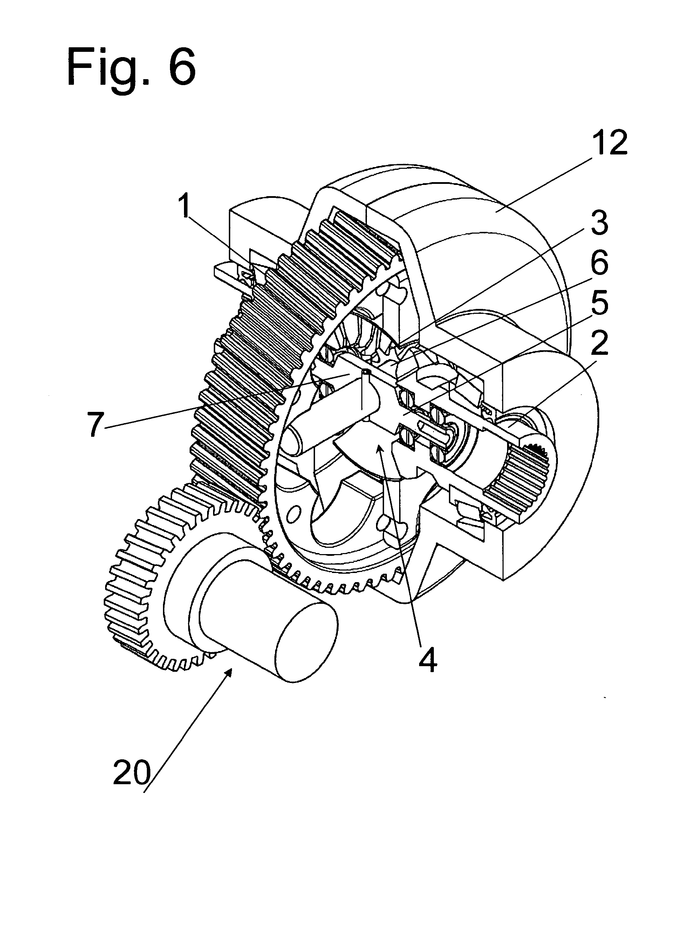

In den Fign. 5 und 6 sind ein Schnitt und eine teilweise angeschnittene räumliche Darstellung einer dritten Variante eines nicht erfindungsgemäßen Differenzials dargestellt. Das Ausgleichsrad 3 in der Fig. 6 liegt in der Darstellung hinter den Achsrädern 2. Ist in den vorhergehenden Ausgestaltungen das Verbindungselement 4 ein einstückiges beispielweise Schmiedebauteil, so ist es in der Variante der Fign. 5 und 6 zweiteilig ausgestaltet. Die beiden Hälften des Verbindungselements 4 werden durch eine mechanische Kopplung, beispielweise über Verschraubungen 21 oder Verstiftungen oder dergleichen miteinander verbunden. Ein weiterer Unterschied, der jedoch unabhängig von der Zweiteiligkeit des Verbindungselements 4 ist, besteht darin, dass die Achsrad-Zapfen 5 jeweils von einem Wälz-, beispielsweise einem Kugellager 22 umgeben sind, auf welchem die Achsräder 2 angeordnet sind. Die Achsräder 2 wiederum sind über eine - hier nicht dargestellte - Schraube in den Achsrad-Zapfen 5 axial gesichert (an den Enden der Zapfen 5 sind jeweils die Aussparungen für die Schrauben zu erkennen).

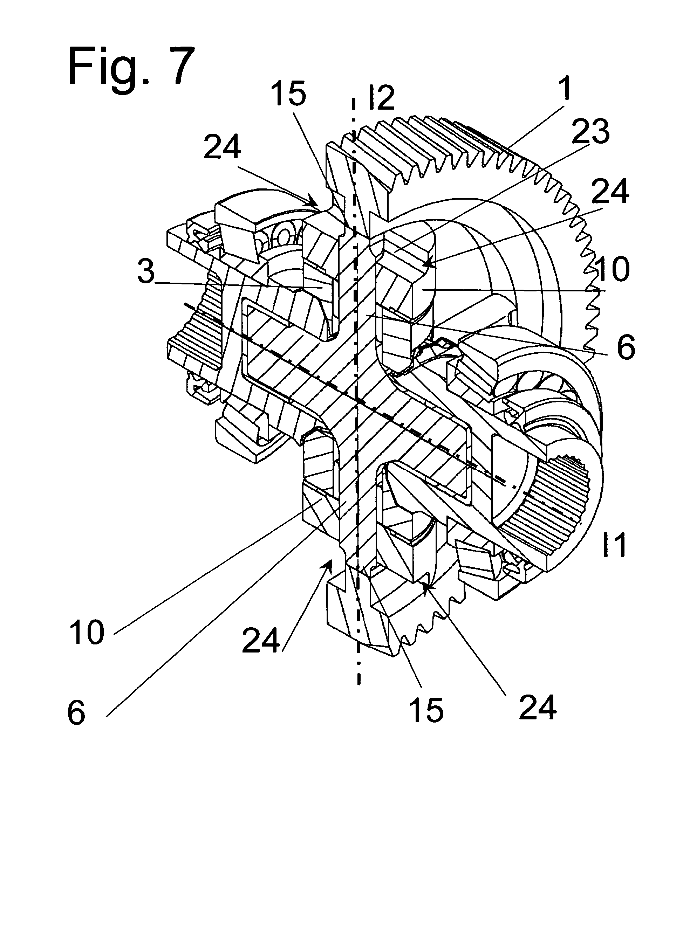

Die beiden Hinterlagen 10 des erfindungsgemäßen Differenzials der Fig. 7 verfügen jeweils an einer Stirnseite über eine als Nut ausgestaltete Aussparung 23. In einer alternativen, nicht dargestellten und nicht erfindungsgemäßen Variante ist zumindest eine Aussparung 23 als Kanal ausgestaltet, welcher auf einer Seite einer Hinterlage 10 mit dem offenen Ende 24 mündet und welcher durchgehend bis zum Fixierungsbereich 15 reicht. Durch die Ausgestaltung als durchgehende Nut ergeben sich somit jeweils zwei offene Enden 24 für die Aussparungen 23. Die Ausgleichsrad-Zapfen 6 reichen jeweils durch die Hinterlagen 10 hindurch und münden über einen Fixierungsbereich 15 auf der Innenseite des Antriebsrads 1. Gleichzeitig ragen die Ausgleichsrad-Zapfen 6 auch durch die Aussparungen 23 hindurch, wobei insbesondere durch die Ausgestaltung der Aussparungen 23 die Fixierungsbereiche 15 von den offenen Enden 24 her zugänglich sind. Damit lassen sich insbesondere die Ausgleichsrad-Zapfen 6 mit der Innenseite des Antriebsrads 1 verbinden.

Weiterhin ist zu erkennen, dass die Innenseite des Antriebsrads 1 und die Ausgleichsrad-Zapfen 6 zumindest in den Fixierungsbereichen 15 flach ausgestaltet sind. Somit wird beispielsweise eine Verbindung mittels Schweißen oder Laserschweißen vereinfacht. Insbesondere ist es ggf. auch möglich, von beiden Seiten vorzugsweise simultan eine Laserschweißung mit zwei Laserstrahlen vorzunehmen.

In den Abbildungen Fig. 1 bis Fig. 7 handelt es sich bei den Achsrädern 2 und bei den Ausgleichsrädern 3 jeweils um Kegelräder, die im Wirkeingriff zueinander stehen.

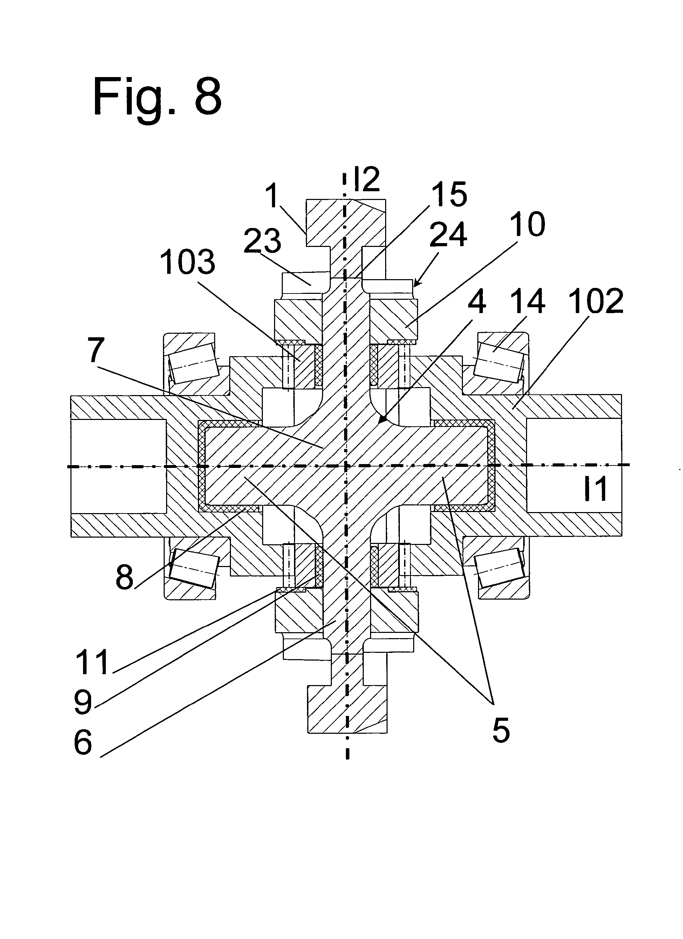

In der Fig. 8 sind die Achsräder 102 als Kronenräder und die Ausgleichsräder 103 als Stirnräder ausgestaltet. Zentral befindet sich das einstückige Verbindungselement 4, von dessen massivem zentralen Bereich 7 die zwei Achsrad-Zapfen 5 und die hier zu sehenden zwei Ausgleichsrad-Zapfen 6 sternförmig ausgehen. In der Richtung senkrecht auf der ersten imaginären Achse I1 und der zweiten imaginären Achse 12 befinden sich in einer Ausgestaltung noch zwei weitere Ausgleichsrad-Zapfen 6 bzw. in einer alternativen Ausgestaltung zwei Befestigungs-Zapfen wie z.B. in der Fig. 2 dargestellt. Das Verbindungselement 4 ist über die Enden der Ausgleichsrad-Zapfen 6 bzw. je nach Ausgestaltung der Befestigungs-Zapfen mit dem Antriebsrad 1 verbunden, von welchem es auch mit einem ersten Drehmoment beaufschlagt wird. Wie hier zu sehen, sind die Enden der Ausgleichsrad-Zapfen 6 über einen Fixierungsbereich 15 mit der Innenseite des als Zahnrad ausgestalteten Antriebsrad 1 z.B. über Schweißen oder Laserschweißen verbunden. Längs der ersten imaginären Achse I1 befinden sich an den Enden der Achsrad-Zapfen 5 jeweils ein Gleitnapf 8 und ein als Kronenrad ausgestaltetes Achsrad 102 mit Kegelrollenlager 14. Die Achsräder 102 stehen dabei in Wirkeingriff mit den zwei als Stirnräder ausgestalteten Ausgleichsrädern 103, die sich längs der zweiten imaginären Achse I2 auf den Ausgleichsrad-Zapfen 6 befinden, wobei zwischen den Ausgleichsrad-Zapfen 6 und den Ausgleichsrädern 103 jeweils eine Gleitlagerbuchse 9 angeordnet ist. Zwischen der Innenseite des Antriebsrades 1 und den Ausgleichsrädern 103 befindet sich wie bei der ersten Bauart des Differenzials jeweils eine Anlaufscheibe 11 und eine Hinterlage 10. Die Hinterlage 10 ist dabei so ausgestaltet, dass sie eine als Nut ausgestaltete Aussparung 23 mit zwei offenen Enden 24 aufweist, so dass der Ausgleichsrad-Zapfen 6, der durch die Hinterlage 10 hindurchreicht, mit der Innenseite des Antriebsrades 1 verbindbar, insbesondere verschweißbar bzw. laserverschweißbar ist. Vergleiche hierzu auch die vorhergehenden Ausgestaltungen.

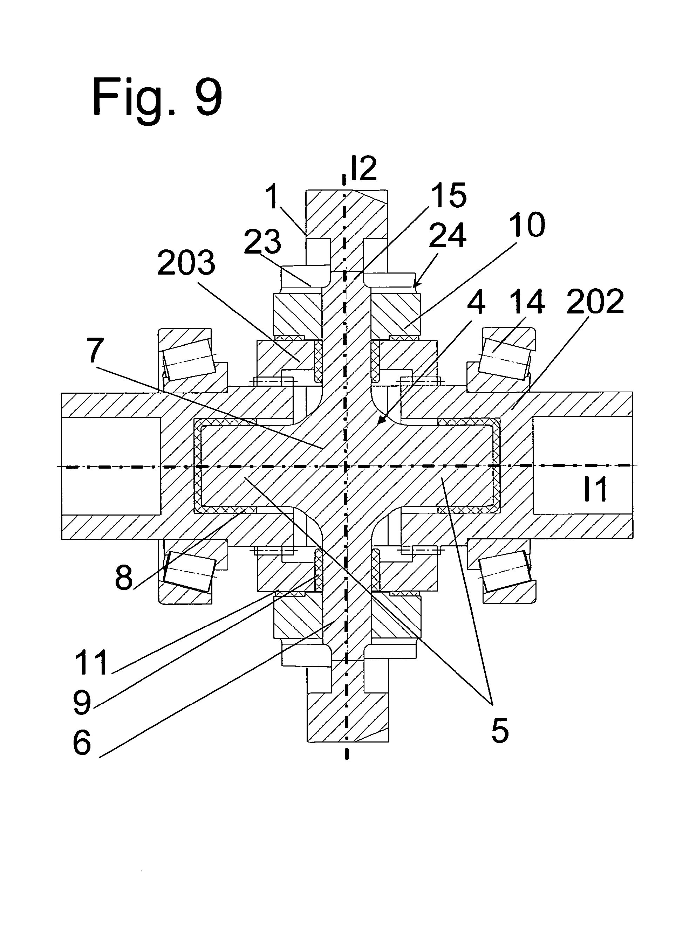

Der Unterschied zwischen der Fig. 8 und der Fig. 9 besteht darin, dass in der Variante der Fig. 9 die Achsräder 202 als Stirnräder und die Ausgleichsräder 203 als Kronenräder ausgestaltet sind.

## Patentansprüche

1. Differenzial,
mit einem Antriebsrad (1), mit zwei Achsrädern (2), mit mindestens einem Ausgleichsrad (3) und mit einem Verbindungselement (4),
wobei das Verbindungselement (4) vom Antriebsrad (1) ein erstes Drehmoment erfährt und auf die zwei Achsräder (2) ein zweites Drehmoment überträgt,
wobei das Antriebsrad (1) einen Innenraum zumindest teilweise umschließt, wobei das Verbindungselement (4) zumindest teilweise innerhalb des Innenraums angeordnet ist und zwei Achsrad-Zapfen (5) aufweist, um welche jeweils eines der zwei Achsräder (2) drehbar angeordnet ist,
wobei die zwei Achsrad-Zapfen (5) entlang einer ersten imaginären Achse (I1) des Verbindungselements (4) angeordnet sind,
wobei das Verbindungselement (4) mindestens einen Ausgleichsrad-Zapfen (6) aufweist, um welchen das mindestens eine Ausgleichsrad (3) drehbar angeordnet ist,
wobei der Ausgleichsrad-Zapfen (6) entlang einer zweiten imaginären Achse (I2) des Verbindungselements (4) angeordnet ist,
wobei die zweite imaginäre Achse (12) im Wesentlichen senkrecht auf der ersten imaginären Achse (I1) steht,
wobei das Verbindungselement (4) einen zentralen Bereich (7) aufweist, von welchem die zwei Achsrad-Zapfen (5) und der mindestens eine Ausgleichsrad-Zapfen (6) sternförmig ausgehen,
wobei der mindestens eine Ausgleichsrad-Zapfen (6) an einem Fixierungsbereich (15) zumindest teilweise mit einer Innenfläche des Antriebsrads (1) verbunden ist,
wobei das Antriebsrad (1) im Wesentlichen in der Art eines Zahnrades ausgestaltet ist und
wobei längs des mindestens einen Ausgleichsrad-Zapfens (6) auf der vom zentralen Bereich (7) abgewandten Seite des Ausgleichsrads (3) eine Hinterlage (10) angeordnet ist,
**dadurch gekennzeichnet,**
**dass** die Hinterlage (10) an einer Stirnseite eine Aussparung (23) in Form einer Nut (23) aufweist, welche ein offenes Ende (24) aufweist und
welche durchgehend von dem offenen Ende (24) bis zu dem Fixierungsbereich (15) verläuft.

2. Differenzial nach Anspruch 1,
**dadurch gekennzeichnet,**
**dass** das Verbindungselement (4) einteilig ausgestaltet ist und
**dass** der zentrale Bereich (7) des Verbindungselements (4) im Wesentlichen symmetrisch um den Schwerpunkt des Antriebsrads (1) angeordnet ist.

3. Differenzial nach Anspruch 1 oder 2,
**dadurch gekennzeichnet,**
**dass** ein Achsrad (2) als Kegelrad und ein Ausgleichsrad (3) als Kegelrad ausgestaltet ist.

4. Differenzial nach Anspruch 1 oder 2,
**dadurch gekennzeichnet,**
**dass** ein Achsrad (2) als Kronenrad und ein Ausgleichsrad (3) als Stirnrad ausgestaltet ist.

5. Differenzial nach Anspruch 1 oder 2,
**dadurch gekennzeichnet,**
**dass** ein Achsrad (2) als Stirnrad und ein Ausgleichsrad (3) als Kronenrad ausgestaltet ist.

## Claims

1. The differential,
with a drive wheel (1), with two fixed wheels (2), with at least one balance wheel (3) and with a connecting element (4),
wherein the connecting element (4) from the drive wheel (1) undergoes an initial torque and transfers a secondary torque to the two fixed wheels (2),
wherein the drive wheel (1) surrounds an inner space at least partly,
wherein the connecting element (4) is arranged at least partly within the space and has two fixed wheel trunnions (5) around which one of the two axle wheels (2) is arranged rotationally,
wherein the two fixed wheel trunnions (5) are arranged along a first imaginary axis (I1) of the connecting element (4),
wherein the connecting element (4) has at least one balance wheel trunnion (6) around which this one balance wheel (3) is arranged rotationally,
wherein the balance wheel trunnion (6) is arranged along a second imaginary axis (I2) of the connecting element (4),
wherein the second imaginary axis (I2) sits for the most part vertically on the first imaginary axis (I1),
wherein the connecting element (4) has a central area (7) from which the two axle wheel trunnions (5) and this one balance wheel trunnion (6) runs in a radial manner, wherein this one balance wheel trunnion (6) is connected at least partly to a fixing area (15) with an inner surface of the drive wheel (1),
wherein the drive wheel (1) is essentially equipped in the manner of a toothed wheel and
wherein a backing plate (10) is arranged along this one balance wheel trunnion (6) on the side of the balance wheel (3) facing away from the central area (7),
**characterized in**
**that** the backing plate (10) on one facing side has a recess (23) in the form of a groove (23) which has an open end (24) and which runs continuously from the open end (24) to the fixing area (15).

2. The differential of claim 1,
**characterized in**
**that** the connecting element (4) is equipped as a single part and
**that** the central area (7) of the connecting element (4) is arranged for the most part symmetrically around of the drive wheel (1) center of gravity.

3. The differential of claim 1 or 2,
**characterized in**
**that** one axle wheel (2) is equipped as a bevel wheel and one balance wheel (3) equipped as a bevel wheel.

4. The differential of claim 1 or 2,
**characterized in**
**that** one axle wheel (2) is equipped as a crown wheel and one
balance wheel (3) is equipped as a spur wheel.

5. The differential of claim 1 or 2,
**characterized in**
**that** one axle wheel (2) is equipped as a spur wheel and one balance wheel (3) equipped as a crown wheel.

## Revendications

1. Différentiel,
avec un pignon menant (1), avec deux pignons d'essieu (2), avec au moins un pignon de différentiel (3) et avec un élément de liaison (4),
sachant que l'élément de liaison (4) reçoit un premier couple du pignon menant (1) et transmet un deuxième couple aux deux pignons d'essieu (2),
sachant que
le pignon menant (1) entoure au moins partiellement un espace intérieur,
sachant que l'élément de liaison (4) est disposé au moins partiellement dans l'espace intérieur et présente deux axes (5) de pignon d'essieu sur chacun desquels un des deux pignons d'essieu (2) est respectivement monté à rotation,
sachant que les deux axes (5) de pignon d'essieu sont disposés le long d'un premier axe imaginaire (I1) de l'élément de liaison (4),
sachant que l'élément de liaison (4) présente au moins un axe (6) de pignon de différentiel sur lequel le pignon de différentiel au moins unique (3) est monté à rotation,
sachant que l'axe (6) de pignon de différentiel est disposé le long d'un deuxième axe imaginaire (I2) de l'élément de liaison (4),
sachant que le deuxième axe imaginaire (12) est sensiblement perpendiculaire au premier axe imaginaire (I1),
sachant que l'élément de liaison (4) présente une région centrale (7) de laquelle partent en étoile les deux axes (5) de pignon d'essieu et l'axe (6) de pignon de différentiel au moins unique,
sachant que l'axe (6) de pignon de différentiel au moins unique est, dans une région (15) de fixation en position, relié au moins partiellement à une face intérieure du pignon menant (1),
sachant que le pignon menant (1) est réalisé pour l'essentiel à la manière d'une roue dentée,
et sachant qu'un élément arrière (10) est disposé le long de l'axe (6) de pignon de différentiel au moins unique sur le côté du pignon de différentiel (3) qui est éloigné de la région centrale (7),
**caractérisé en ce**
**que** l'élément arrière (10) présente sur un côté frontal un évidement (23) sous la forme d'une rainure (23), qui présente une extrémité ouverte (24) et qui s'étend continûment depuis l'extrémité ouverte (24) jusqu'à
la région (15) de fixation en position.

2. Différentiel selon la revendication 1,
**caractérisé en ce**
**que** l'élément de liaison (4) est réalisé d'un seul tenant, et en ce que la région centrale (7) de l'élément de liaison (4) est disposée de manière essentiellement symétrique par rapport au centre de gravité du pignon menant (1).

3. Différentiel selon la revendication 1 ou 2,
**caractérisé en ce**
**qu'**un pignon d'essieu (2) est réalisé sous forme de pignon conique et un pignon de différentiel (3) sous forme de pignon conique.

4. Différentiel selon la revendication 1 ou 2,
**caractérisé en ce**
**qu'**un pignon d'essieu (2) est réalisé sous forme de couronne dentée et un pignon de différentiel (3) sous forme de pignon droit.

5. Différentiel selon la revendication 1 ou 2,
**caractérisé en ce**
**qu'**un pignon d'essieu (2) est réalisé sous forme de pignon droit et un pignon de différentiel (3) sous forme de couronne dentée.
